# EUROPEAN PATENT SPECIFICATION

(11) **EP 1 715 737 B1**
(45) Date of publication and mention of the grant of the patent: **13.08.2008**
(21) Application number: 05722078.2
(22) Date of filing: 18.02.2005
(51) Int. Cl.: A01K 73/04, G01B 7/30

(54) **System for charting the position of a fishing gear with sensor modules**
Anlage zur Standortsbestimmung eines Fischfanggerätes mit Sensormodulen
SYSTEME POUR SCHEMATISER LA POSITION D'UN ENGIN DE PECHE AVEC DES MODULES DE DETECTION

(30) Priority: 18.02.2004 NO 20040708
(43) Date of publication of application: 02.11.2006
(60) Divisional application: 08004161.9
(73) Proprietor: Skjold-Larsen, Henning, 3120 Tönsberg (NO)
(72) Inventor: Skjold-Larsen, Henning, 3120 Tönsberg (NO)
(74) Representative: HOFFMANN EITLE
(86) International application number: PCT/NO2005/000063
(87) International publication number: WO 2005/077162

(56) References cited:
- WO-A-89/10054
- GB-A- 1 336 897

## Description

The present invention relates to a system for charting the position of a fishing gear with sensor modules which permit highly accurate charting of the geometry of the fishing gear.

A number of sensor modules for use in connection with fishing gear are available. Examples of such modules are: symmetry sensors, trawleye sensors, trawl probes, trawl speed sensors, distance sensors, grid sensors, depth sensors, catch volume sensors, etc. These modules provide information about the position of the fishing gear in relation to the seabed, its speed, its direction of movement relative to water flow, the volume of fish inside the fishing gear etc.

Such modules, their positioning and uses are described in, for example, "Scanmar info", Norden 2-2003 and Norden 3-2003, published by Scanmar AS, PO Box 44, N-3167 Åsgårdstrand, Norway.

Although a great deal of information about the fishing gear is provided by the aforementioned modules, it is not possible, by using the prior art, to chart the position of parts of the fishing gear. This is of interest partly because it is crucial for the number of fish that are caught. A charting of this kind will also readily permit any faults to be remedied.

In connection with trawls it is important to ensure that the meshes are always taut, since the fish will be able to swim through meshes that are not taut. In connection with purse seines, and especially when fishing for tuna, it is important to detect the presence of underwater currents, since fish swimming with these currents may damage the purse seine. In such a case, the fishing operation has to be interrupted immediately.

The fishing gear will also make a certain acoustic image when it moves in the water. Incorrect positioning of the fishing gear could result in an acoustic image that scares away the fish.

For these reasons it is important to be able to check at all times whether the geometry of the fishing gear is correct and the meshes are taut.

The term "fishing gear" as used in this description is meant to include trawls, purse seines, Danish seines, lines and fish traps, and other similar gear.

GB 1 336 897 discloses an instrument for measuring and recording the trawling line direction in relation to the otter board plane. The instrument comprises an angle recording device adapted to operate below the surface of the water and enabling the position of the trawling line during fishing to be found and currently recorded in relation to the plane of the otter board.

WO-A-89/10054 discloses an apparatus for monitoring the angle setting of two wires. The apparatus is intended for monitoring the mutual angle setting of two trawl wires.

The invention contains a sensor module which permits a charting of the position of the area of the fishing gear in which the sensor is located. In a preferred embodiment, the sensor module will in addition measure the characteristics of the surrounding environment/fishing gear for general monitoring of the trawl operation.

Sensor modules for use in connection with fishing gear comprise an outer main body containing a sensor device for measuring different values, and fastening devices for fastening the main body to the fishing gear. The sensor device is either completely encased in the main body, arranged on the surface of the main body or partly contained within the main body.

The sensor modules are as a rule secured to the fishing gear by wires, elastic cords or rope, one end of the wire/elastic cord/rope being fastened to the fishing gear and the other end being fastened to the fastening devices. Depending on the type of sensor module, two or more wires/elastic cords/ropes will be used.

Depending on the type of sensor module, the main body will, for example, be configured as a cylinder, as a flattened square main body or as a cube. A common feature of all the shapes is that the main body has a surface extending at least along one direction. Thus, the placing of a sensor module on fishing gear will provide contact (or a short distance) between the fishing gear and the main body in a wide area. This will permit the angular position of the said area of the fishing gear to be derived based on the angular position of the main body in said one direction.

To this end, the invention is characterised in that the sensor module comprises a device for measuring the angular position of the main body, and thus the angular position of the fishing gear in the immediate vicinity of the module.

The device for measuring the angular position of the main body could, for example, comprise one or more inclinometers for measuring angular position in one or more directions.

In a preferred embodiment, the sensor module comprises a sensor device, and in a preferred variant of this embodiment the sensor module is a symmetry sensor, a trawleye sensor, a trawl probe, a trawl speed sensor, a distance sensor, a grid sensor, a depth sensor, a net transponder, a temperature sensor, a catch volume sensor or a tension sensor.

The invention relates to a system for charting the position of fishing gear, the system comprising:
- a plurality of said sensor modules for determining measurements relating to angular positions of parts of the fishing gear and for transmitting these measurements to a processing unit;
- a processing unit designed to combine said measurements to provide a representation of the fishing gear;
- a display unit for displaying the position of the fishing gear.

The invention is characterised by the features set forth in the attached claims.

The invention will now be illustrated by means of an example depicted in the drawings. Although the example relates to a trawl probe with a square, flattened main body, it will be obvious to the skilled person that other variants are also possible.
Fig. 1 shows the location of sensor modules on a fishing trawl;
Fig. 2 shows a trawl probe secured to a fishing trawl;
Fig. 3 shows an embodiment of the invention;
Fig. 4 shows another embodiment of the invention;
Fig. 5 shows the areas of the fishing trawl in which the angular position can be determined.

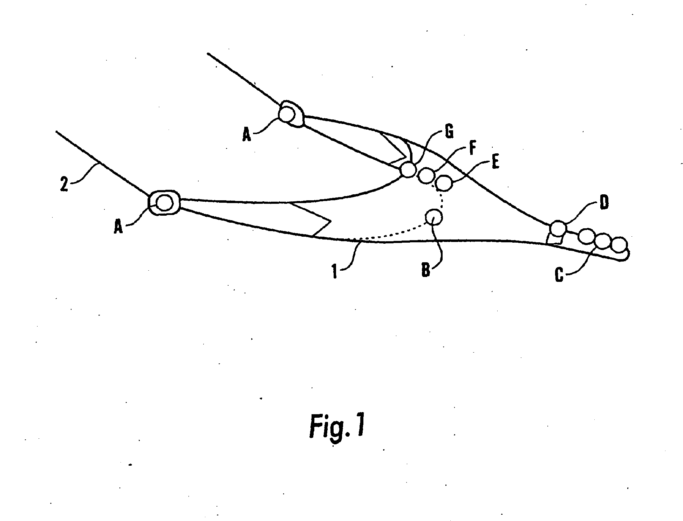

Figure 1 shows the location of different sensors on a trawl. The reference numeral 1 indicates the trawl 1, and the numeral 2 indicates lines running to the boat. With regard to the different sensors, A indicates the point at which distance, height and depth sensors are located, B the point at which the net transponder and rip sensor are placed, C the point at which catch volume sensors are placed, D the point at which a grid sensor (optionally an additional trawleye sensor, trawl probe, trawl speed sensor) is located, E the point at which temperature and depth sensors are located, F the point at which a trawleye sensor, trawl probe and height sensor are placed and G the point at which the trawl speed and symmetry sensors are located. Of course, these sensors may be located in other positions.

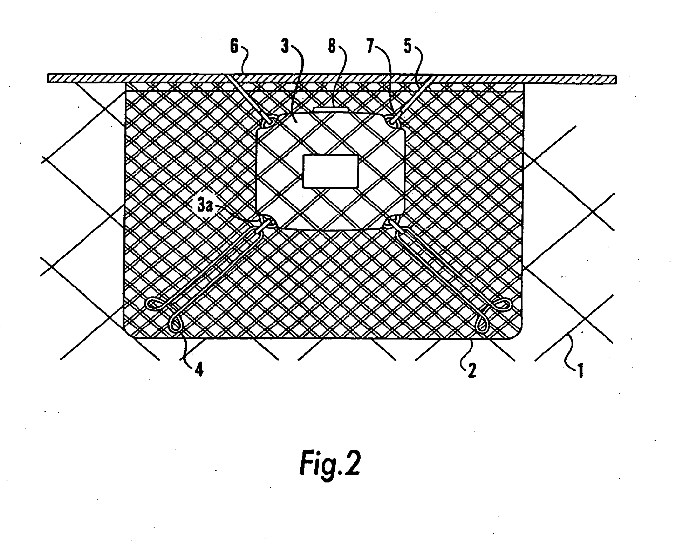

Figure 2 shows a sensor module in the form of a trawl probe secured to a fishing trawl 1. A trawl probe is a sensor module which indicates in which area the catch is taking place by detecting entry of fish, trawl height, opening and bottom clearance. As can be seen, both in Figure 1 and in Figure 2, the trawl probe comprises a main body 3 arranged on the upper side of the trawl 1. The trawl probe is in a bag 2 made of a fine-meshed netting, and is secured to the head rope 6 in that the bag 2 and an attachment rope 5 are seized tightly to the head rope 6. Inside the bag, the trawl probe 3 is fastened to the bag by rubber straps 4 and an attachment rope 5 and karabiners or snap hooks 7. The main body comprises fastening devices, in this case in the form of rings 3a for attachment to the trawl. The actual sensor device consists of a transducer 8 placed on the side of the trawl probe 3 facing towards the head rope. As can be seen, this sensor module is flattened and square, and is arranged in such manner that it rests against the trawl, or so that the distance between the trawl and the sensor module is small. Thus, the angular position of the area of the trawl lying in contact with or in the immediate vicinity of the sensor module can be assumed to be the same as the angular position of the sensor module main body.

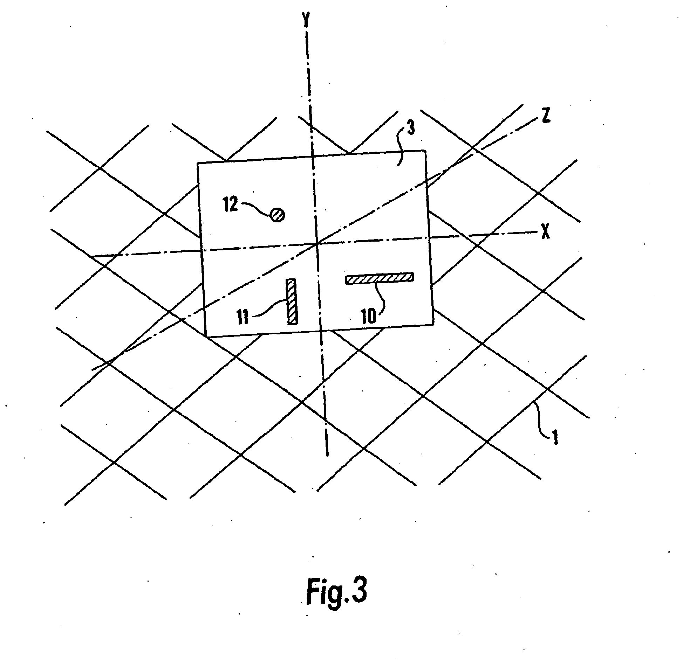

Figure 3 shows a sensor module according to the invention, equipped with devices for measuring angular position in three directions. The sensor module comprises a main body 3, optionally a sensor device (tension sensor, geophone etc, not shown) and fastening devices for attachment to the trawl (not shown). The main body 3 in this example is square and flattened and three directions can be defined in connection with the plane of the main body: a first direction z that is at right angles to the plane of the main body, and a second direction x and a third direction y at right angles to z and which are at right angles to each other. The sensor module according to the invention comprises a first inclinometer 10 which will measure changes in the position of the main body in the x direction. A second inclinometer 11 will, in a similar way, measure changes in the position of the main body in relation to the y direction, and a third inclinometer 12 will measure changes in the z direction. A sensor module could comprise one, two or three devices for measuring angular position depending on the location of the sensor module on the trawl, the geometry of the main body and the number/location of angle measuring devices in adjacent sensor modules.

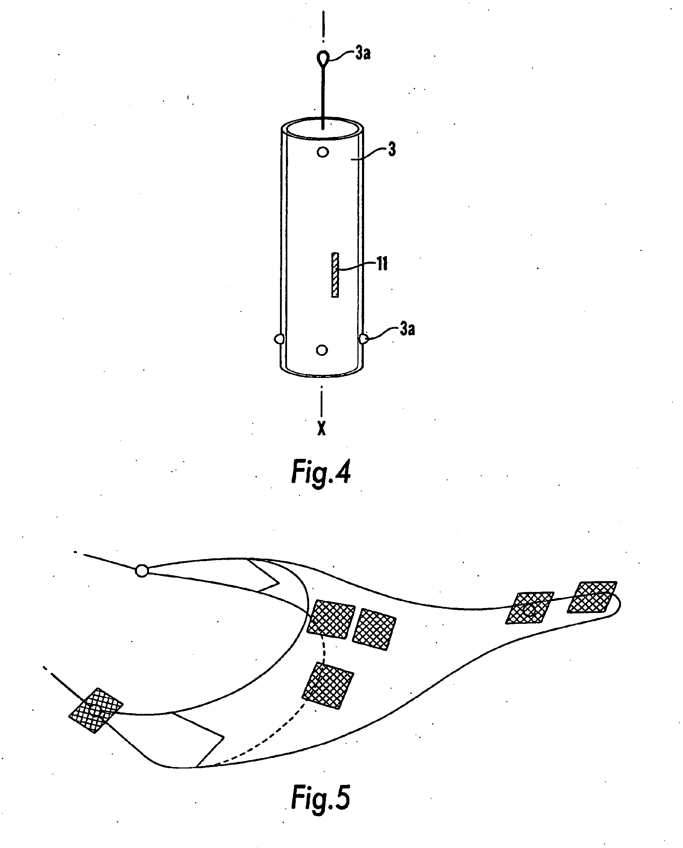

Figure 4 shows another embodiment of the sensor module according to the invention, this time in connection with a cylindrical main body. One example of the sensor module of such shape is the net transponder, which is designed to indicate the position of the bottom rope. The net transponder comprises a cylindrical main body 3, fastening means 3a for attachment to the trawl (not shown) and a sensor device (not shown). The sensor module also comprises a device 11 for measuring the angular position of the main body 3 in the longitudinal direction x of the cylinder.

As mentioned above, the invention will comprise a main body having devices for measuring angular position, but it could also comprise a sensor device for measuring parameters associated with the fishing operation. The last-mentioned alternative will also include the case in which the sensor module comprises a sensor device and angular position measuring devices, but where the sensor device is not activated, so that the module is only used for measuring angular position.

The invention comprises a system for providing, on the basis of the measuring results, a representation of the position of the trawl. The accuracy of the representation will of course depend upon the number of angular position measuring devices and their location on the trawl. The system for charting the position of fishing gear according to the invention comprises:
- a plurality of sensor modules for determining measurements relating to angular positions of parts of the fishing gear and for transmitting these measurements to a processing unit;
- a processing unit designed to combine said measurements to provide a representation of the fishing gear;
- a display unit for displaying the position of the fishing gear.
Figure 5 shows the areas of the fishing trawl in which the angular position could be determined fairly accurately.

By using the invention, it will thus be possible to detect whether parts of the fishing gear have been displaced relative to their optimal position. It will also be possible to simulate the whole of the fishing gear by extrapolating the positions of areas where measurements are not made.

As will be obvious to the skilled person in the field, by using the invention it is possible to determine the angular position of the sensor modules in relation to the horizontal and the vertical direction, and also in relation to predetermined directions that define the correct position of the sensor module (and the fishing gear).

## Claims

1. A system for charting the position of a fishing gear,
**characterised in that** it comprises
- a plurality of sensor modules for determining measurements relating to angular positions of parts of the fishing gear and for transmitting these measurements to a processing unit, wherein each sensor module comprises a main body adapted to be placed on the surface of the fishing gear and having fastening devices for attachment to the fishing gear, and at least one device for measuring the angular position of the main body, and thus the angular position of the fishing gear in the immediate vicinity of the module;
- the processing unit designed to combine said measurements to provide a representation of the fishing gear;
- a display unit for displaying the position of the fishing gear.

2. A system according to claim 1,
**characterised in that** each sensor module also comprises a sensor device.

3. A system according to claim 2,
**characterised in that** the sensor device is a symmetry sensor, a trawleye sensor, a trawl probe, a trawl speed sensor, a distance sensor, a grid sensor, a depth sensor, a net transponder, a temperature sensor, a catch volume sensor or a tension sensor.

4. A system according to one of the preceding claims,
**characterised in that** the device for measuring the angular position of the main body comprises an inclinometer.

5. A system according to one of preceding claims 1 to 4,
**characterised in that** the device for measuring the angular position of the main body comprises two inclinometers for measuring position in two directions.

6. A system according to one of preceding claims 1 to 4,
**characterised in that** the device for measuring the angular position of the main body comprises three inclinometers for measuring position in three directions.

## Patentansprüche

1. System zum Nachverfolgen der Position eines Fanggeräts, **dadurch gekennzeichnet, dass** es umfasst,
eine Vielzahl von Sensormodulen zum Bestimmen von Messungen betreffend Winkelpositionen von Teilen des Fanggeräts und zum Übertragen dieser Messungen an eine Verarbeitungseinheit, bei dem jedes Sensormodul einen Hauptkörper, der angepasst ist, um auf der Oberfläche des Fanggeräts angeordnet zu sein und Befestigungseinrichtungen zum Anbringen an das Fanggerät aufweist, und wenigstens eine Einrichtung zum Messen der Winkelposition des Hauptkörpers und folglich der Winkelposition des Fanggeräts in der direkten Umgebung des Moduls umfasst;
wobei die Verarbeitungseinheit aufgebaut ist, um die Messungen zu kombinieren, um eine Darstellung des Fanggeräts bereitzustellen;
eine Displayeinheit zum Anzeigen der Position des Fanggeräts.

2. System nach Anspruch 1, **dadurch gekennzeichnet, dass** jedes Sensormodul ferner eine Sensoreinrichtung umfasst.

3. System nach Anspruch 2, **dadurch gekennzeichnet, dass** die Sensoreinrichtung ein Symmetriesensor, ein Trawleye-Sensor, ein Schleppnetzmessfühler, ein Schleppnetzgeschwindigkeitssensor, ein Abstandssensor, ein Gittersensor, ein Tiefensensor, ein Netztransponder, ein Temperatursensor, ein Einfangvolumensensor oder ein Spannungssensor ist.

4. System nach einem der vorhergehenden Ansprüche, **dadurch gekennzeichnet, dass** die Einrichtung zum Messen der Winkelposition des Hauptkörpers ein Klinometer umfasst.

5. System nach einem der vorhergehenden Ansprüche 1 bis 4, **dadurch gekennzeichnet, dass** die Einrichtung zum Messen der Winkelposition des Hauptkörpers zwei Klinometer zum Messen einer Position in zwei Richtungen umfasst.

6. System nach einem der vorhergehenden Ansprüche 1 bis 4, **dadurch gekennzeichnet, dass** die Einrichtung zum Messen der Winkelposition des Hauptkörpers drei Klinometer zum Messen einer Position in drei Richtungen umfasst.

## Revendications

1. Système pour schématiser la position d'un engin de pêche,
**caractérisé en ce qu'**il comprend :
- une pluralité de modules de détection pour déterminer des mesures relatives à des positions angulaires de parties de l'engin de pêche et pour transmettre ces mesures à un module de traitement, dans lequel chaque module de détection comprend un corps principal qui est adapté pour être placé sur la surface de l'engin de pêche et comprenant des dispositifs de fixation pour le rattachement à l'engin de pêche, et au moins un dispositif pour mesurer la position angulaire du corps principal et, de ce fait, la position angulaire de l'engin de pêche à proximité immédiate du module ;
- un module de traitement adapté pour combiner lesdites mesures de façon à fournir une représentation de l'engin de pêche ;
- un module d'affichage pour afficher la position de l'engin de pêche.

2. Système selon la revendication 1, **caractérisé en ce que** chaque module de détection comprend également un dispositif de détection.

3. Système selon la revendication 2,
**caractérisé en ce que** le dispositif de détection est un détecteur de symétrie, un détecteur Trawleye, une sonde de chalut, un détecteur de vitesse de chalut, un détecteur de distance, un détecteur de grille, un détecteur de profondeur, un transpondeur de filet, une sonde de température, un détecteur de volume de prise, ou bien un détecteur de tension.

4. Système selon l'une quelconque des revendications précédentes, **caractérisé en ce que** le dispositif pour mesurer la position angulaire du corps principal comprend un inclinomètre.

5. Système selon l'une quelconque des revendications précédentes 1 à 4, **caractérisé en ce que** le dispositif pour mesurer la position angulaire du corps principal comprend deux inclinomètres pour mesurer une position dans deux directions.

6. Système selon l'une quelconque des revendications précédentes 1 à 4, **caractérisé en ce que** le dispositif pour mesurer la position angulaire du corps principal comprend trois inclinomètres pour mesurer une position dans trois directions.
